# EUROPEAN PATENT SPECIFICATION

(11) **EP 2 908 500 B1**
(45) Date of publication and mention of the grant of the patent: **21.11.2018**
(21) Application number: 14290036.4
(22) Date of filing: 14.02.2014
(51) Int. Cl.: H04L 29/08, H04L 12/24

(54) **METHOD FOR PROVIDING INFORMATION IN A COMMUNICATIONS NETWORK**
VERFAHREN ZUR BEREITSTELLUNG VON INFORMATIONEN IN EINEM KOMMUNIKATIONSNETZ
PROCÉDÉ DE FOURNITURE D'INFORMATIONS DANS UN RÉSEAU DE COMMUNICATIONS

(43) Date of publication of application: 19.08.2015
(73) Proprietor: Alcatel Lucent, 91620 Nozay (FR)
(72) Inventor: Bunse, Stephan, 70435 Stuttgart (DE)
(74) Representative: Nokia EPO representatives

(56) References cited:
- EP-A1- 2 461 547
- EP-A2- 2 518 946
- US-A1- 2010 017 460
- YOUNG LEE ET AL.: "ALTO Extensions to Support Application and Network Resource Information Exchange for High Bandwidth Applications in TE networks; draft-lee-alto-app-net-info-exchange-04.tx t", IETF; STANDARD WORKINGDRAFT, 21 October 2013 (2013-10-21), pages 1-22, XP015095697, [retrieved on 2013-10-21]
- MICHAEL SCHARF ET AL: "Monitoring and abstraction for networked clouds", INTELLIGENCE IN NEXT GENERATION NETWORKS (ICIN), 2012 16TH INTERNATIONAL CONFERENCE ON, IEEE, 8 October 2012 (2012-10-08), pages 80-85, XP032277564, DOI: 10.1109/ICIN.2012.6376038 ISBN: 978-1-4673-1527-2

## Description

### Field of the invention

The present invention is related to communications networks, in particular to a method and apparatus for providing information in a communications network.

### Background

In a communications network, there is often a need to provide information on the communications network, for example on a path through the communications network or on one or more nodes of the communications network. To retrieve the information, a network protocol might be used, e.g. the ALTO protocol (ALTO = Application-Layer Traffic Optimization). The ALTO protocol is used to retrieve abstract network information from an ALTO server which can be set-up by different organizations such as telecom operators or independent organizations.

Young Lee et al.: "ALTO Extensions to support Application and Network Resource Information Exchange for High Bandwidth Applications in TE networks", draft-lee-alto-app-net-info-exchange-04.txt. IETF; STANDARD WORKINGDRAFT, 21 October 2013, pages 1 - 22, XP015095697, describes an ALTO information model and protocol extensions to support application and network resource information exchange for high bandwidth applications. An ALTO client can interact with multiple ALTO servers directly or the ALTO client can interact with one representative ALTO server and subsequent interaction is done by the representative one to the rest of the ALTO servers.

It is the objective of the present invention to provide a method and apparatus to at least improve handling of information provided from a plurality of servers, e.g. ALTO servers, to a client, e.g. ALTO client.

### Summary

The objective of the present invention is achieved by a method for providing information in a communications network as defined in the attached claims. The method comprises collecting by a client information on one or more network nodes from a plurality of servers by means of a protocol for retrieving abstract network information, in particular an ALTO protocol. The objective of the present invention is further achieved by client, in particular an ALTO client, adapted to collect information on one or more network nodes from a plurality of servers, in particular ALTO servers, by means of a protocol for retrieving abstract network information, in particular an ALTO protocol as defined in the attached claims. The objective of the present invention is further achieved by a computer program product, adapted to execute the above method, when executed on a computer as defined in the attached claims.

In a preferred embodiment, the client receives one or more information requests of one or more applications. The client processes the one or more requests by means of the collected information. Preferably, the client outputs a result of the processing back to the respective application. One or more applications, which might in particular application programs, request information at the client. The client collects information at the one or more servers, usually at a plurality of servers and processes the information and the request based on the collected information. Then the client outputs a result to the application. The result might be in particular a proposal of a node for use by the application.

In a preferred embodiment, the client evaluates the information collected from the plurality of servers. Preferably, the client attributes one or more respective certainty factors to the information collected from different ones of the plurality of servers. The client collects information from the servers and evaluates the information, in particular the client assesses if the information is trustworthy. This evaluation is based on information collected from the servers. If the information is evaluated, a certainty factor is attributed to the respective information collected from the respective server.

In a preferred embodiment, for evaluating the information the client determines an information reliability factor of one or more servers of the plurality of servers from which the information has been collected. Preferably, the client attributes the one or more determined information reliability factors as certainty factors to the corresponding part of the collected information. For example, the client determines that a particular server provides tendentious information, i.e. information which apparently always favours certain nodes or network paths. This might be the case if the server (which provides the information) belongs to a telecom operator who wants to promote its own network servers or nodes or a certain path or certain paths through the network, which might be optimal from a service provider's perspective, but not from a user's or application's perspective. Therefore, the client determines that the information provided by said server and thus said server itself is not neutral. The client determines that the information reliability factor of said server is rather low and attributes to the corresponding information provided by said server a low certainty factor indicating that the information is regarded as rather uncertain.

In a preferred embodiment, for evaluating the information the client determines one or more information quality factors of (or for) the collected information. Preferably, the client attributes the one or more determined information quality factors as certainty factors to the corresponding part of the collected information. Preferably, determining an information quality factor of information on a network map comprises assessing said information on a network map based on the granularity of the network map. The more detailed the network map is provided (from a server), the better and thus more certain the information is regarded. Therefore, a higher information quality factor and thus higher certainty factor will be attributed to more detailed information than to information which is less detailed. Preferably, determining an information quality factor of information on a cost map comprises assessing said information on a cost map based on the details of the cost map, in particular if numerical information or only a ranking is provided. If the cost map provides information about the actual costs of a network path in terms of concrete values, this information is regarded as better than information which gives only a ranking or order from a proposed cheapest path to a most expensive path, for example. The ranking, i.e. ordinal information, gives no information about the size of the differences between the costs. The more detailed the cost map is provided, the better the information on the cost map is regarded. A higher information quality factor and a higher certainty factor is provided to a more detailed information on a cost map than on information which is less detailed. Preferably, an information quality factor and thus certainty factor is attributed depending on the novelty of the information. Preferably, recent information is regarded as better than previous information and thus a higher information quality factor and thus a higher certainty factor is attributed to recent information than to previous information.

In a preferred embodiment, the client evaluates the information collected from the plurality of servers and processes the one or more requests by means of the collected information and the result of the evaluation.

In a preferred embodiment, the information which is provided by different ones of the plurality of servers is evaluated separately, whereby a respective certainty factor is attributed to each of the servers and each of the provided information of the respective server, in other words whereby a respective certainty factor is attributed to a particular server and to the information collected from said particular server and this is done for every server which provided information.

In a preferred embodiment, the certainty factor for the information (preferably information quality factor) provided by a respective server and the certainty factor of the respective server (preferably information reliability factor) are added and this is done for all servers and the information provided by the respective server. By this, for each of the servers and the respective information a combined certainty factor is provided and compared to the combined certainty factors of the other servers, respectively, this means the combined certainty factors calculated as the sum of the certainty factor of a particular server and the certainty factor of the information provided by said particular server. Based on the comparison of the combined certainty factors of each server and information thereof, a selection of the server and the respective information is done based on the best, in particular highest combined certainty factor of said server and the respective information provided by said server.

In a preferred embodiment, the client compares the combined certainty factors (which are derived from the certainty factors assigned to the one or more servers added to the certainty factors assigned to the information provided by the respective server) and the client selects as result of the evaluation the information of the server because said information has the highest (in particular combined) certainty factor.

In a preferred embodiment, the client processes the one or more requests and in particular evaluates the information collected by the plurality of servers.

In a preferred embodiment, the client combines the information collected from different ones of the servers based on the evaluation and processes the request based on this combined information. Preferably, the client attributes a respective certainty factor to the respective information provided from a respective server and further the client attributes a respective certainty factor to a respective server. The certainty factor of a server and the certainty factor of the information provided by said server are added and thus combined. This is done for all servers which provided information on a request, e.g. of an application. Preferably, a server which did not provide information on a request is neglected, i.e. excluded from the further processing in regard of a particular request. Preferably, the information of the server is selected, of which the combined certainty factor (= the certainty factor of the server and the certainty factor of the respective information) is higher than the combined certainty factors of the other servers and the respective information provided by said servers. The information of the server which is selected due to the highest combined certainty factor is used to process the request.

For example, the application requested information on a network map, information on a network map is collected by the client from at least two of the servers. For example, one server provides a network map which is very detailed. A network map comprises usually the nodes of the network in an abstracted and thus simplified manner. For example, the nodes of the network are grouped together to a cluster. A cluster is usually referred to by a PID (= provider defined identifier). Thus the network map consists of a plurality of PIDs which group the network nodes. If there are many PIDs which contain only a few nodes, the information is more detailed and thus more valuable. If the network map provided by one particular server, e.g. server A, consists of more PIDs for the same network than a network map provided by another server, e.g. server B, than the network map provided by server A is more detailed and thus more valuable and gets a higher information quality factor than the information of server B. Therefore, the information of server A, here the network map, is assigned a higher certainty factor than the information provided by server B. In principle, the request of the application will be satisfied by providing the network map collected from server A by the client to the application. However, to continue this example, also the information reliability factor of the servers, here exemplary server A and server B, are taken into consideration. Based on information provided by the server A the server A is assigned a very low reliability factor. The information which is the basis for evaluating the reliability factor of the server might the information which is requested by the application and/or by other application(s) in regard of similar or different requests or might be information which is collected by the client on a regular basis, e.g. due to internal data management events, such as a refresh of information which is collected in certain time intervals (daily, monthly, etc.). In this example, the client determines that server A often provides information which apparently favours always the same paths through the network or certain nodes, in a way some kind of independently from the kind of requests of the requesting applications. Therefore, the client determines that server A provides tendentious information which is regarded as less certain than neutral information which is apparently better adapted to a specific request. Therefore, the client assigns to server A a very low information reliability factor and thus a very low certainty factor to the information which is provided by server A on the exemplary request for a network map. The client adds the certainty factor for the information (information quality factor) provided by server A and the certainty factor for the server A (information reliability factor) and obtains a combined certainty factor for the information, here network map, from server A. The client then adds similarly the certainty factor for the information (information quality factor) provided by server B and the certainty factor for the server B (information reliability factor) and obtains a combined certainty factor for the information, here network map, from server B.

In the given example, the information reliability factor of server A is so low, that the combined certainty factor of the information, here the network map, from server A is lower than the combined certainty factor of the information from server B. Therefore, the client selects the network map provided from server B and satisfies the request of the application for a network map by providing or forwarding the network map collected from server B to the application.

In a preferred embodiment, the application requests a network map at the client. In a preferred embodiment, the application requests a cost map at the client. In a preferred embodiment, the application requests an endpoint-cost-service. In this latter case, the application wants to know the costs between e.g. two PIDs, more specifically between two addresses, namely a source address and a destination address which belongs each to a different PID. For this reason, the application might indicate a source address and a destination address to the client. Based on the information collected from the servers, the client determines to which PID the source address belongs and to which PID to destination address belongs, whereby this determination is usually made on a network map derived as information from the servers. Then based on a cost map derived from the information collected from the servers, the costs between the two PIDs and therefore between the destination address and the source address is determined. As described above, the decision which information of which server is used, this means which network map and which cost map is provided based on the evaluation of the certainty factors of the servers and the provided information of the respective server.

In a preferred embodiment, the client processes the one or more requests multiple times based on information collected from different ones of the plurality of servers, evaluates the information collected from the different ones of the plurality of servers and used for said multiple processing and selects one of the results of said multiple processing of the requests based on the comparison of the respective evaluation.

For example, the client performs a first processing of the request based on information collected from a first of the plurality of servers. Then the client performs a second processing of the request based on information collected from a second of the plurality of servers. Then the client selects the result of the first or second processing based on the evaluation. What is described for a first and a second processing applies analogously for a third, forth etc. processing depending on the number of servers which provide information based on which a request is processed.

In a preferred embodiment, the information is evaluated separately for each of the servers and then the evaluation provided for the information of a respective server is compared with the evaluation provided for the information of one of the other respective servers. Based on comparing the information, the best information is selected and provided as a result of the evaluation.

In a preferred embodiment, the collected information and/or the evaluated information is stored, preferably at the client. In a preferred embodiment, the information provided by each of the plurality of servers is stored separately from the information provided from each other servers. Preferably, the information collected from a first server is stored in a first information storage at the client, the information collected from a second server is stored in a second information storage at the client, etc. Similarly, after each processing, in particular after determining the information reliability factor and determining the information quality factor, evaluated information might be stored in the same or different storage media. Further, preferably, feedback information from one or more applications is stored in same or different storage media.

In a preferred embodiment, the information collected from one or more of the plurality of servers is stored in a data base at the client and provided by a time stamp indicating the time at which the information has been received or the time at which the information has been stored. Because of the storing of the information, the information provided from a respective server can be used, even if the server is temporarily not reachable. Further this allows to recapitulate how a result of the evaluation has been achieved.

In a preferred embodiment, the information collected from the one or more servers is processed immediately without being stored intermediately.

In a preferred embodiment, the client re-evaluates one or more of the certainty factors by means of feedback information received from one or more of the applications. For example, based on a first evaluation, a result is achieved and provided to a particular application which has requested information. For example, the application has requested to be informed of a network map. The network map might be provided based on the evaluation procedure which has been described above in the context of the server A and server B of which the network map has been selected and provided to the application. To continue this example, the application might determine that the network map is not enough detailed for the purposes of the application. Therefore, the application gives feedback to the client in that the provided network map contains not enough details. Therefore, the client re-evaluates the certainty factor provided to the information collected from server B and assigns a lower information quality factor as certainty factor to the information provided by server B. Due to the re-evaluation, i.e. due to the lower certainty factor of the information collected from server B, the client comes to the result that the combined certainty factor of the information from server B is lower than the combined certainty factor for the information from server A and therefore provides the network map collected from server A to the application. In another example, the application might have requested to be informed of a particular node, where the application can retrieve network data. Therefore, the client collects information on one or more nodes from the servers and selects a particular node according to the information provided from e.g. server C to the application. Then, however, the application determines that the node does not work properly, here the application can not retrieve the desired network data from the node in the way, quantity or quality or by the costs, the application destined to retrieve the desired data. Accordingly, the application gives feedback to the client, that the node does not work properly, i.e. does not meet the expectation of the application. Therefore, the client re-evaluates the information collected from the server and assigns a lower certainty factor to the information of server C which has provided the information on the node previously. Consequently and exemplarily, the information of server D, i.e. another node supposed to provide the desired network data for the application, is selected by the application and provided as the result of the re-evaluation of the information to the application so that the application can use this node, the node selected based on the information of server D, to retrieve the desired network data.

In a preferred embodiment, the client collects information on a same network node from a plurality of servers. In other words, the information which is collected by the client from a plurality of servers is information on a same network node.

In a preferred embodiment, the result outputted by the client to the application is information about one or more nodes, in particular in form of an indication of a particular node for use by the application to retrieve or to store data. In preferred embodiments, the information which is outputted as result by the client to the application is a network map, a cost map and/or an end-point cost service.

In a preferred embodiment, the result which is outputted based on the evaluation is a node for use by the one or more applications to retrieve network data and/or to store network data. Based on the evaluation of the collected information, the client outputs a result to the one or more applications. The result which is outputted to a particular application is a node, this is the client determines a node and indicates this node to the application or informs the application of the node. This node might be a termed a network node or a network server and is usually not identical to the one or more servers from which the client has collected the information for determining the node. The latter node might be in particular a network data node such as a data server which is used for storing network data or retrieving network data thereof.

In a preferred embodiment, the information which is collected by the client from the one or more servers and used to evaluate the collected information might be directly related to the one or more requests of the one or more applications. For example, the requests of the one or more applications are directed to a network map and the information collected from the one or more servers by the client is network map information.

In a preferred embodiment, the information which is collected by the client might be information which is not directly related to the requested information. This might in particular be the case if the information is collected by the client from the one or more servers on a regular basis. For example, every day the client collects from the one or more servers a network map and cost map in regard of a particular network. The client stores the information, preferably separately for each server, in a data base at the client. Based on this information, the information reliability of the servers is evaluated as described above and a respective certainty factor is assigned to the respective server. Then an application requests information on a node where the application desires to store data. Accordingly, the client might use the stored information to evaluate the information quality of the stored network data, e.g. network maps and cost maps collected from the respective servers. Alternatively or in addition, the client might request the servers to provide information on a particular node according to the request of the application and the one or more servers provide information on a particular node as a result. Usually, the one or more servers might not provide the same node as information to the client, but usually, some servers might provide or term or indicate different nodes as proposal for use by the application. In other words, a server might indicate a node different from the nodes indicated by the other servers. The client then evaluates the information provided by the servers. The client might evaluate the information stored in the data base. The client might evaluate the information provided by the servers as a response to the request of the application, wherein the request is forwarded by the client to the servers or a corresponding request is formulated by the client to the servers. Based on the evaluation, certainty factors are assigned to the information based on the quality of the information and certainty factors are assigned to the servers as information reliability factors. The client adds the certainty factors of a particular server and of the respective information and does this for each of the servers and the respective information, wherein a server which did not provide information, in particular on the request, is excluded from the evaluating process. The client selects the server and the respective information which has the highest combined certainty factor as already described above in other embodiments. By this the client selects the node which is indicated by said selected server with the highest combined certainty factor. The client informs the application of said selected node. In other words, as response to the request of the application the client returns the selected node to the application. The node which is returned by the client might be termed as proposal for use by the application for the desired purpose, namely for example retrieve network data from the node. Preferably, the client returns to the application only one node as proposal and not a plurality of nodes as proposals.

Preferably, in case the application is not satisfied with the proposed node, e.g. because the application can not retrieve from the node the desired data, the application gives a corresponding feedback to the client that the node does not work properly. Based on this feedback, the client might again process the information of the servers and might re-evaluate the certainty factors based on the feedback of the application. For example, more recent information might have been collected from one or more of the servers since the previous evaluation and more recent information is usually assigned a higher certainty factor as older information. Based on this re-evaluation, the client selects another node for use by the application and provides indication of said node as proposal to the application.

In a preferred embodiment, the one or more applications might name one or more nodes when directing a request to the client. For example, an application knows about a number of nodes, where it can retrieve the desired information. The client returns based on the above described evaluation to the application the best node to which the application can connect to retrieve the desired data. In another example, the application knows about several nodes, where it can store its data. The client returns the best node where the application can place the data.

In a preferred embodiment, the client checks the one or more nodes named by the one or more applications to determine if there is misbehaviour of the nodes, that is if the nodes do not work as desired. For example, the one or more applications name one or more nodes to the client. The nodes named by the application might be already in use by the application or might only be named by the application as a kind of pre-selecting nodes from which the client then selects the possibly best node based on the above described evaluation step. The client preferably checks the one or more named nodes, if there is a misbehaviour of the nodes, for example if the nodes do not work properly because they do not meet the expectation of one or more applications. These applications which are not satisfied by the nodes might be different applications than those who named the nodes as pre-selected nodes or might be the same applications. In other words, for checking misbehaviour of the nodes, the feedback information of the applications which currently direct a particular request are used and/or feedback information of applications which have been previously provided with a result including the node by the client are considered. Preferably, the feedback information is stored at the client in a storage medium or in plurality of storage media e.g. dependent on the stored feedback.

In a preferred embodiment, the client provides a cost estimation for one or more of the nodes. For example, the client might provide information about the cost for storing information on one node. In another example, the client might provide information about the cost for retrieving information such as network data from one of the nodes. For example, the client might provide a cost information, if one or nodes are used as a data path through the network.

The cost might refer, for example, to the bandwidth, data rate or financial effort in regard of using a node, e.g., as a data path via the node, for storing or retrieving information such as network data at the node.

In a preferred embodiment, the client provides a certainty estimation for one or more nodes. The client might in particular determine a value for the node denoting how valuable the information about the node is. This value depends e.g. on the novelty of the information, on the detail and on the server providing the information. The more novel the information is, the more valuable is the information about the node. The more detailed the information is, the more valuable is the information about the node. The more the server providing the information on the node can be trusted based on e.g. the experience made with the server (e.g. it provided usually trustworthy information which proved true by e.g. the applications) the more valuable is the information about the node.

In a preferred embodiment, the client returns the node with the highest certainty factor to be the best node. Preferably, the client returns only one node as a result and not a number of proposals to the application program. The certainty factor might be determined as a combined certainty factor, i.e. combined from the certainty factor which results from the information reliability factor and the certainty factor which results from the information quality factor. Preferably, if the application detects that the node proposed by the client does not operate properly, the application reconnects to the client to get a new proposal. Preferably, the client assesses how the previous decision was created and is able to adapt the certainty factors, in particular the information reliability factors of the servers which provided the information and the information quality factors of the respective information provided by the respective servers. The certainty factors, in particular the information quality factors, might be re-evaluated based on the reported misbehaviour of the nodes, namely based on the feedback of the application, this is e.g. a feedback that the previously proposed node does not work properly.

What has been described herein in the context of a term used in singular, applies generally also on the term in plural, unless otherwise derivable from the description. For example, what has been described in the context of a node, applies generally on a plurality of nodes or more nodes similarly. Analogously, what is described in the context of nodes applies generally also on one node.

What has been termed herein as an application, might be in particular an application program.

The present invention might be implemented in hardware, software or combination thereof.

Features of preferred embodiments, as described generally above and in more detail below, might be combined thereby forming further preferred embodiments. The scope of the invention is not limited by the described embodiments, but is defined by the claims.

### Brief description of the figures

The teaching of the present invention might be better understood by the following detailed description, in which
- Fig. 1: depicts a schematic view of components of a part of a communications network
- Fig. 2: depicts a more detailed view of components of a part of a communications network

### Detailed description

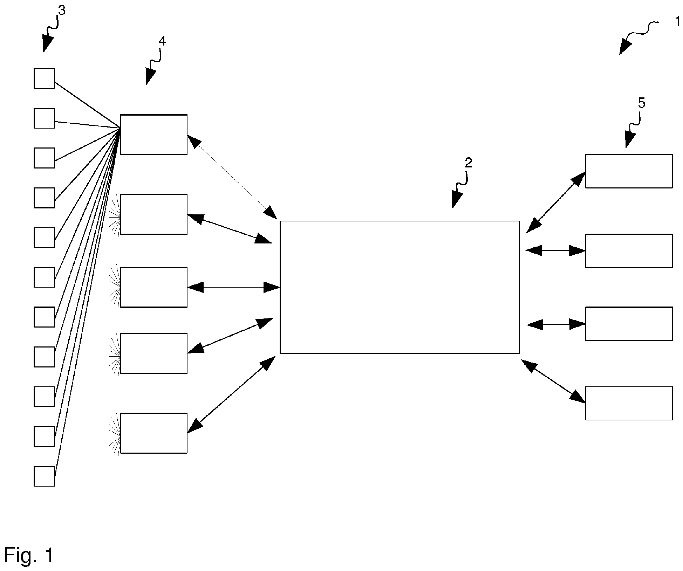

Figure 1 depicts schematically a part of a communications network 1 and components therein. Figure shows a client 2, which in this exemplary example is an ALTO client. Client 2 receives information from one or more servers 4 which are in this example ALTO servers. Client 2 is for the information transfer connected with the servers 4 in any way, in particular by wireline or wirelessly. The information which is provided by the servers 4 to the client 2 is in particular information on the communication network 1, in particular on the one or more nodes 3 of the communications network 1. The nodes 3 might be network servers. The nodes 3 might be data nodes. The nodes 3 might be used to forward data, in particular data flows or communications flows through the communications network 1. The nodes 3 might be used to store data on the nodes 3. The nodes 3 might be used to retrieve data from the nodes 3. The data retrieved from the nodes 3 might in particular be data stored on the nodes 3.

Figure 1 depicts that servers 4 collect data about the nodes 3. For illustrative reasons, for only one server 4 the collecting is illustrative by lines between the server 4 and the nodes 3. Preferably, all servers 4 might collect data about all nodes 3. Figure depicts illustratively eleven nodes 3, five servers 4 and four applications 5 and of course one client 2, because the present invention is in particular about one client obtaining information from a plurality of servers.

Figure 1 further depicts applications 5. The applications 5 might in particular be application programs which request information at the client 2 in order that the client 2 requests the information at the servers 4.

An application 5 might in particular request information on a path through the communications network 1, in particular via the one or more nodes 3 of the communications network 1. The application 5 might request information about a node to retrieve information from the node 3. The application 5 therefore requests at the client 2 that the client should indicate to an application the best node 3 of the nodes 3 where the application 5 can retrieve the information that the application desires, for example network data. The application 5 might request information about a node, in particular an indication of the best appropriate node by the client 2, where the application 5 can store information, e.g., network data, because the application 5 wants to store data on a network node 3 and wants the client 2 to indicate the best node which can be used for storing the data of the application 5.

In should be noted that the depicted number of servers 4, nodes 3 and applications 5 are only illustrative and a smaller or bigger number might also be implemented.

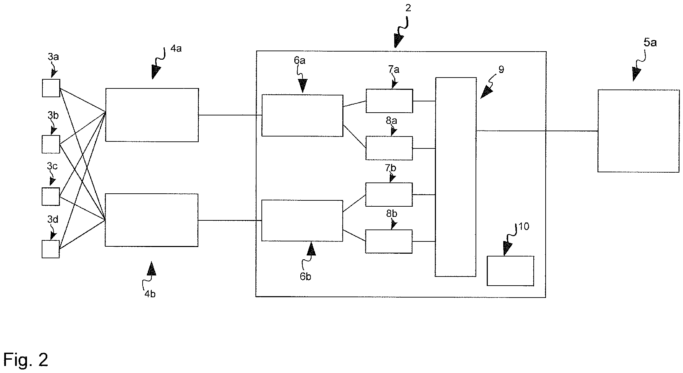

Figure 2 depicts in more detail components of the client 2 and steps of the method of providing information in the communications network 1. Figure 2 shows illustratively two servers 4, one is server 4a, the other is server 4b. The number of the components is only illustrative. In particular, figure 2 shows only one application 5 which is specified as 5a. Further applications 5 might also implemented. Same applies for the further components according to the implementation.

In this context, it is noted that references signs such as for example 4 for the servers might be more specified by letters, such as "a", "b" etc. In case, the specification with the letters is not appropriate, the features are referred to by reference signs without letters. In case, specification seems appropriate, the features are referred to by reference signs with letters. In other words, a server 4a is one of the servers 4, hence a particular one specified in a particular context. This applies also to further features which are specified with letters to the reference signs.

The servers 4 obtain information about four network nodes 3, namely node 3a, node 3b, node 3c and node 3d. The client 2 collects from server 4a information in particular about the four nodes 3a, 3b, 3c and 3d and stores the information collected from server 4a in an information storage 6a at the client 2. The client 2 collects from server 4b information in particular about the four nodes 3a, 3b, 3c and 3d and stores the information collected from server 4b in an information storage 6b at the client 2. The information storage 6a and the information storage 6b might be separate storage devices or might be implemented logically separately within the same hardware. The client 2 might collect and store information regularly or on a particular request. In this example, application 5a requests information about the one or more nodes 3a, 3b, 3c, 3d, namely the application 5a wants the client 2 to indicate the node which is the best appropriate to retrieve network data, for example detailed data on a certain path or certain paths through the communications network 1.

In order to be able to reply to the request of the application program 5a, the client 2 collects information on the nodes 3a, 3b, 3c, 3d from the servers 4a and 4b. The servers 4a and 4b might have stored information of any kind about the nodes 3a, 3b, 3c and 3d. Therefore, the servers 4a and 4b select the information about the nodes 3a, 3b, 3c and 3d according to which information might be appropriate for the corresponding request, i.e. which of the nodes 3a, 3b, 3c and 3d might be best appropriate for an application to retrieve network data. Alternatively, the servers 4a and 4b might provide any information about the nodes 3a, 3b, 3c and 3d to the requesting client 2. In either case, the servers 4a and 4b provide information on any of the nodes 3a, 3b, 3c, 3d, this means the servers 4a and 4b in this example do not yet select a particular node which might be the best appropriate node. A pre-selection of a best appropriate node by the servers 4a and 4b might be implemented in another example which is not the described in the following.

The client 2 processes the request of application 5a multiple times, here two times, because two servers 4a and 4b are considered in this example. Client 2 processes the request of application 5a based on information collected from different ones of the plurality of servers, namely server 4a and server 4b. Client 2 evaluates the information which is collected from the different servers 4a and 4b and used for the multiple processing. Then, client 2 selects one of the results of said multiple processing of the requests based on the comparison of the respective evaluation and outputs the selected result to the application 5a.

In this example, the client 2 stores any information collected from server 4a about the nodes 3a, 3b, 3c and 3d which is relevant for selecting a best node appropriate to retrieve network data by the application 5a at storage 6a. Further, client 2 stores any information collected from server 4b about the nodes 3a, 3b, 3c, and 3d which is relevant for selecting a best node appropriate to retrieve network data by the application 5a at storage 6b.

Based on the data stored at storage 6a and at storage 6b, the client 2 evaluates the information. For evaluating the information collected from the servers 4a and 4b, the client 2 attributes one or more respective certainty factors to the information. The client 2 attributes one or more certainty factors to the information collected from server 4a. The client 2 attributes one or more certainty factors to the information collected from server 4b. The certainty factors determined by the client 2 are an information reliability factor 7a for (or of) the server 4a, an information reliability factor 7b for the server 4b, an information quality factor 8a for the information which has been collected from the server 4a and an information quality factor 8b for the information which has been collected from the server 4b.

In the exemplary embodiment, the client 2 determines an information reliability factor 7a of server 4a and attributes the determined information reliability factor 7a as certainty factor to the corresponding part of the collected information, this is collected from server 4a and stored in storage 6a. Further, client 2 determines an information reliability factor 7b of server 4b and attributes the determined information reliability factor 7b as certainty factor to the corresponding part of the collected information, this is collected from server 4b and stored in storage 6b.

In a another step, described below, the client 2 determines an information quality factor 8a for the information collected from server 4a and an information quality factor 8b for the information collected from server 4b.

For determining the information reliability factor 7a of server 4a, the client determines if server 4a provides trustworthy information. This evaluation might be based on the information stored in storage 6a which has been collected on this present request of the application 5a for indication of a best node 3 where to retrieve network data. This evaluation might be and will usually be based also on the information which is collected from server 4a and stored in storage 6a previously, in particular regularly for information about the nodes 3. The evaluation might be based further on information which is collected from server 4a and stored in storage 6a on further requests of one or more applications 5. This applies also for server 4b correspondingly. The information reliability factor 7a is in particular determined on an evaluation, if the server 4a provides apparently tendentious information, in particular if server 4a apparently favours particular networks nodes which might be the network nodes operated by the same provider which operates the server 4a. The server 4a might appear to be tendentious, in particular in case it favours always or many times the same nodes independently from the request for indicating the best node for a particular application. In this example, server 4a apparently provides neutral information because server 4a seems not to favour always the same nodes 3 and therefore the information provided by server 4a seems to be adapted to a specific request of a specific application 5.

Accordingly, client 2 determines a high information reliability factor 7a for server 4a, namely a information reliability factor 7a "two" out of six numbers with "one" being the best and "six" the worse. Consequently, client 2 assigns a certainty factor "two" corresponding to the information reliability factor 7a for server 4a to the corresponding information which has been collected and stored by client 2 on the request of application 5a.

Analogously, client 2 determines an information reliability factor 7b of server 4b. However, as server 4b appears to be tendentious as server 4b apparently (e.g. according to the stored experiences of client 2) favours specific nodes in a way independently of a specific request, client 2 assigns a rather low information reliability factor 7b to server 4b and correspondingly a low certainty factor, e.g. a factor "four", to the corresponding information which has been collected and stored by client 2 on the request of application 5a.

For determining an information quality factor 8a of the information collected from server 4a, client 2 evaluates the information collected from server 4a according to criteria such as detail or novelty of the information. The evaluation of the information quality factor 8a might be processed on the information provided by the server 4a on a specific request, e.g. on the present request of application 5a. Alternatively or in addition, the evaluation of the information quality factor might be processed on information previously provided by server 4a on another request or in response to regularly information collecting by the client 2 from the server 4a. In the latter case, the information quality factor 8a might be given in a general way to information provided by server 4a and possibly combined, e.g. by making an average, with the information quality factor 8a determined to the information provided by server 4a on a specific request, for example here to indicate a node appropriate to retrieve data.

Again for determining an information quality factor 8a to the information collected from server 4a, in the present example, the client 2 might determine that the information provided by server 4a is not recent information, but is information dated on e.g. last week, but server 4a apparently is not able to provide more recent information. Accordingly, client 2 assigns a low value, e.g. "five", to the information collected from server 4a as information quality factor 8a and a corresponding certainty factor to the information, namely certainty factor "five".

Analogously, client 2 determines an information quality factor 8b to the information collected from server 4b. In this example, client 2 determines that the information provided by server 4b on the specific request for an appropriate node is quite new, i.e. up-to-date. Therefore, client 2 determines a high information quality factor 8b, e.g., "one", to the information provided by server 4b and assigns a corresponding certainty factor "one" to the information for an appropriate node according to the request of the application 5a.

Consecutively, client 2 combines the information collected from server 4a and server 4b based on the evaluation. The combining of the information is symbolized in figure 2 by reference sign 9. Client 2 adds the certainty factor attributed to server 4a as information reliability factor 7a (here "two") and the certainty factor attributed to the information provided by server 4a as information quality factor 8a (here "five") and results a combined certainty factor for server 4a, in this case "seven".

Analogously, client 2 adds the certainty factor attributed to server 4b as information reliability factor 7b (here "four") and the certainty factor attributed to the information provided by server 4b as information quality factor 8b (here "one") and results a combined certainty factor for server 4b, in this case "five".

As a result, client 2 attributes to the information provided by server 4a a combined certainty factor "seven" and to the information provided by server 4b a combined certainty factor "five". According to the definition, in this example a lower number presents a lower, i.e. worse, certainty factor and also combined certainty factor. Therefore, the combined certainty factor "five" for the information provided by server 4b is better, because higher, as the combined certainty factor "seven" for the information provided by server 4a. Therefore, client 2 determines that the information provided by server 4b is more appropriate to reply to the request of the application 5a for a particular node.

Consequently, client 2 uses the information of server 4b for determining the node which seems to be the best for the application 5a for retrieving data. Client 2 determines by the information provided by server 4b that e.g. node 3c is best appropriate for the application 5a and outputs the result "node 3c" to the application 5a.

In the above example, the combined certainty factor has been determined by adding the information reliability factor 7 of a server 4 and the information quality factor 8 of the information provided by said server 4. In other examples, the combined certainty factor might be provided by making an average out of the information reliability factor 7 of a server 4 and the information quality factor 8 of the information provided by said server 4.

In the above example, the client 2 determines the result based on the information provided by a server 4. As described above, the information collected from a server 4 might be provided on a specific request which might be the present request or one or more previous requests or might be provided generally, e.g. regularly provided information on network maps. Alternatively or in addition, a server 4 might also select or pre-select, e.g. as a proposal, a result corresponding to a request, for example the server 4 might propose a node 3 for use by the application 5.

In other words, according to the implementation, client 2 might determine a result on the information provided by the server 4, wherein the information might be provided by the server 4 in a general manner and/or the information might be provided by the server 4 in response to a specific request by the application 5 and corresponding request by the client 2 to the server 4. Similarly, the information might be pre-selected by the server 4 without giving a proposal for a result or the information provided by the server 4 might include, e.g. in addition, a proposal for a particular result. In the latter case, the server 4 might propose a particular node 3 for use by the application 5. The client 2 might follow the proposal of the server 4 and determine that the node 3 proposed by the server 4 seems to be the best appropriate node 3 or the client 2 might determine that a node 3 different from that proposed by the server 4 seems to be the best and selects said node 3 (different from the node 3 proposed by the server 4) according to its own evaluation to the application 5 as best appropriate node.

In a preferred embodiment, e.g. continuing in the above example, the client 2 re-evaluates one or more of the certainty factors by means of feedback information received from one or more of the applications 5. The feedback information might be stored in a separate storage medium, e.g. storage medium 10, or might be stored in the respective storage media 6a, 6b according to which server 4a, 4b, respectively, provided previously information about a node 3 for which now the client 2 receives feedback from an application 5. Here, application 5a gives feedback on the node 3c selected by client 2 for the application 5a. Actually, after a given time, the application 5a determines that node 3c is not very appropriate for retrieving data thereof, because the node 3c does not provide the application 5a with the desired data. Then application 5a gives feedback, e.g. by a feedback message, to client 2 that node 3c is quite not appropriate. Accordingly, client 2 re-evaluates the certainty factor, more precisely the information quality factor 8b of the information, of server 4b which provided the respective information on which client 2 previously determined node 3c as the best node. The information quality factor 8b of server 4b was before "one", but the information now proved not very good. Therefore, the information quality factor 8b is re-evaluated and a value "five" is given to the information quality provided by server 4b on the request of application 5a. Consequently, the combined certainty factor of the information provided by server 4b is determined as "nine", because the information quality factor 8b is re-evaluated as "five" and the information reliability factor 7b of server 4b should remain in this example "four".

Consequently, client 2 determines that the combined certainty factor of server 4b, namely "nine", is worse than the combined certainty factor of server 4a which still is "seven". Therefore, client 2 determines the node for use by the application 5a based on the information provided by server 4a. In this example, client 2 determines node 3d as the best node based on the information provided by server 4a and outputs this result, i.e. "node 3d" to the application 5a.

In the above example, the application which has given the present request, has given feedback on the result proposed by the client 2 as first proposal, which was node 3c which proved not very good. Alternatively or in addition, the feedback might be provided by further applications 5. For example, some of the applications 5 might give feedback to the client 2 that the applications 5 are not satisfied with specific proposals provided by client 2 to these applications 5. For example, client 2 determines that it had selected previously results provided to the applications 5 based on information which the client 2 had primarily collected from a particular server 4. Then client 2 determines that said latter server 4 apparently is not much reliable, because many applications 5 are not satisfied with proposals which in the end are based on information collected from this server 4. Client 2 therefore assigns a low information reliability factor 7 on said server 4. As long as said server 4 does not prove to be better, in the following evaluation processes of any request, the information of said server 4 might always be processed with this low information reliability factor 7 of said server 4 and therefore certainty factor attributed to said server 4.

What has described in the context of a node as a result outputted by the client 2 to the application 5, applies analogously to embodiments that the result outputted by the client 2 to the application 5 is a network map, cost map or end-point cost service for use by the application 5. The client 2 collects the respective information about a network map, cost map or end-point cost service from the servers 4, evaluates the information by determining a respective information reliability factor 7 for each of the servers 4 and a respective information quality factor 8 for the information provided by the respective servers 4, combines the certainty factors (corresponding to a respective information reliability factor and respective information quality factor) to a combined certainty factor for each server 4 and corresponding information of said server 4. The client 2 then selects the network map, cost map or end-point cost service with the highest combined certainty factor as result and outputs the result to the application 5.

Figure depicts a client 2. The components of the client 2 might be implemented in hardware, software or combination thereof. In particular, the components for evaluating the information reliability factor 7 and information quality factor 8 and for combining 9 the corresponding certainty factors might be implemented in hardware, software or combination thereof, in particular by a computer or by a plurality of computers.

In particular, client 2 and its components might be implemented as a single unit, a stand-alone device, or within a database, integrated in a computer and/or within a computer network. The components of the client 2 may be implemented through the use of hardware, software and/or hardware capable of executing software in association with appropriate software.

More specifically, the components of client 2 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of components of client 2 may be implemented as processing blocks in a software program. Such software may be employed in a digital signal processor, micro-controller, or general-purpose computer implemented as a single device or integrated in a computer network. The storage media of client 2, e.g. the storage media 6a, 6b and 10, might be implemented as separate devices or components or within the same device, in particular logically separated.

The components of client 2 may comprise program code embodied in tangible media, such as magnetic recording media, optical recording media, solid state memory, floppy diskettes, CD-ROMs, hard drives, or any other machine-readable storage medium, wherein, when the program code is loaded into and executed in client 2 and/or into the components of client 2, client 2 and/or the components of client 2 become apparatuses used for practicing the invention.

Based on the teaching of the present invention, a client, in particular ALTO client, is able to give a good guidance on a communications network, e.g. on nodes of the communications network, in particular which node is the best one to connect to, even if the servers, in particular ALTO servers, provide contradictive, tendentious or incomplete information.

## Claims

1. A method for providing information in a communications network (1), the method comprising:
- collecting by a client (2) information about one or more network nodes (3) of the communications network (1) from a plurality of servers (4) by means of an Application-Layer Traffic Optimization, ALTO, protocol,
**characterised in that** the method further comprises:
- evaluating the information collected from the plurality of servers (4) by the client (2), wherein the client (2) assesses if the information is trustworthy, wherein evaluating the information comprises:
- determining one or more information quality factors (8) of the collected information and attributing the one or more determined information quality factors (8) as certainty factors to the corresponding part of the collected information;
and attributing one or more respective certainty factors to the information collected from different ones of the plurality of servers (4).

2. The method according to claim 1, the method further comprising:
- receiving, by the client (2), one or more information requests of one or more applications (5);
- processing the one or more requests by means of the collected information;
- outputting a result of the processing back to the respective application (5).

3. The method according to claim 1, wherein evaluating the information further comprises:
- determining an information reliability factor (7) of one or more servers (4) of the plurality of servers (4) from which the information has been collected and attributing the one or more determined information reliability factors (7) as certainty factors to the corresponding part of the collected information.

4. The method according to claim 2, further comprising:
- evaluating the information collected from the plurality of servers (4) by the client (2) and processing the one or more requests by means of the collected information and the result of the evaluation.

5. The method according to claim 4, further comprising:
- combining (9) the information collected from different ones of the plurality of servers (4) based on the evaluation and processing the request based on this combined information.

6. The method according to claim 2, wherein the step of processing the one or more requests comprising:
- processing the request multiple times based on information collected from different ones of the plurality of servers (4), wherein the client (2) performs a first processing of the request based on information collected from a first (4a) of the plurality of servers (4) and wherein then the client (2) performs a second processing of the request based on information collected from a second (4b) of the plurality of servers (4);
- evaluating the information collected from the different ones (4a, 4b) of the plurality of servers (4) and used for said multiple processing;
- selecting one of the results of said multiple processing of the requests based on the comparison of the respective evaluation.

7. The method according to claim 1, further comprising:
- storing (6) the collected information and/or the evaluated information at the client (2).

8. The method according to claim 2, further comprising:
- re-evaluating one or more of the certainty factors by means of feedback information received from one or more of the applications (5), wherein the one or more applications (5) give feedback to the client (2) that the applications (5) are not satisfied with specific proposals provided by the client (2) to the applications (5).

9. The method according to claim 1, wherein collecting information further comprises:
- collecting by the client (2) information about a same network node (3) of the communications network (1) from a plurality of servers (4).

10. The method according to claim 2, wherein outputting a result comprises:
- outputting a node (3) for use by the one or more applications (5) to retrieve network data and/or to store network data.

11. A client (2) adapted to collect information about one or more network nodes (3) of the communications network (1) from a plurality of servers (4) by means of an Application-Layer Traffic Optimization, ALTO, protocol,
**characterised in that**
the client (2) is further adapted to evaluate the information collected from the plurality of servers (4), wherein the client (2) is adapted to assess if the information is trustworthy, wherein in evaluating the information the client (2) is adapted to determine one or more information quality factors (8) of the collected information and to attribute the one or more determined information quality factors (8) as certainty factors to the corresponding part of the collected information and to attribute one or more respective certainty factors to the information collected from different ones of the plurality of servers (4).

12. A computer program adapted to execute the method according to one of the claims 1-10, when the computer program is executed on a computer.

## Patentansprüche

1. Verfahren zum Bereitstellen von Informationen in einem Kommunikationsnetz (1), das Verfahren umfassend:
- Sammeln durch einen Client (2) von Informationen über einen oder mehrere Netzwerkknoten (3) des Kommunikationsnetzes (1) von einer Vielzahl von Servern (4) mittels eines Anwendungsschicht-Datenverkehrsoptimierungs, Application-Layer Traffic Optimization, ALTO,-Protokolls, **dadurch gekennzeichnet, dass** das Verfahren ferner umfasst:
- Bewerten der durch den Client (2) von der Vielzahl von Servern (4) gesammelten Informationen, wobei der Client (2) einschätzt, ob die Informationen vertrauenswürdig sind, wobei das Bewerten der Informationen umfasst:
- Bestimmen von einem oder mehreren Informationsqualitätsfaktoren (8) der gesammelten Informationen und Zuordnen des einen oder der mehreren bestimmten Informationsqualitätsfaktoren (8) als Wahrscheinlichkeitsfaktoren für den entsprechenden Teil der gesammelten Informationen;
und Zuordnen von einem oder mehreren jeweiligen Wahrscheinlichkeitsfaktoren zu den Informationen, die von verschiedenen der Vielzahl von Servern (4) gesammelt wurden.

2. Verfahren nach Anspruch 1, das Verfahren ferner umfassend:
- Empfangen, durch den Client (2), von einem oder mehreren Informationsanforderungen von einer oder mehreren Anwendungen (5);
- Verarbeiten der einen oder mehreren Anforderungen mittels der gesammelten Informationen;
- Ausgeben eines Ergebnisses der Verarbeitung zurück an die jeweilige Anwendung (5).

3. Verfahren nach Anspruch 1, wobei das Bewerten der Informationen ferner umfasst:
- Bestimmen eines Informationszuverlässigkeitsfaktors (7) von einem oder mehreren Servern (4) der Vielzahl von Servern (4), von denen die Informationen gesammelt wurden, und Zuordnen des einen oder der mehreren bestimmten Informationszuverlässigkeitsfaktoren (7) als Wahrscheinlichkeitsfaktoren für den entsprechenden Teil der gesammelten Informationen.

4. Verfahren nach Anspruch 2, ferner umfassend:
- Bewerten der von der Vielzahl von Servern (4) gesammelten Informationen durch den Client (2) und Verarbeiten der einen oder mehreren Anforderungen mittels der gesammelten Informationen und des Ergebnisses der Bewertung.

5. Verfahren nach Anspruch 4, ferner umfassend:
- Kombinieren (9) der von verschiedenen der Vielzahl von Servern (4) gesammelten Informationen basierend auf der Bewertung und Verarbeitung der Anforderung basierend auf diesen kombinierten Informationen.

6. Verfahren nach Anspruch 2, wobei der Schritt des Verarbeitens der einen oder mehreren Anforderungen umfasst:
- mehrfaches Verarbeiten der Anforderung basierend auf den Informationen, die von verschiedenen der Vielzahl von Servern (4) gesammelt wurden, wobei der Client (2) eine erste Verarbeitung der Anforderung basierend auf den Informationen durchführt, die von einer ersten (4a) der Vielzahl von Servern (4) gesammelt wurden, und wobei der Client (2) dann eine zweite Verarbeitung der Anforderung basierend auf den Informationen durchführt, die von einem zweiten (4b) der Vielzahl von Servern (4) gesammelt wurden;
- Bewerten der von den verschiedenen (4a, 4b) der Vielzahl von Servern (4) gesammelten und für die mehrfache Verarbeitung verwendeten Informationen;
- Auswählen von einem der Ergebnisse der mehrfachen Verarbeitung der Anforderungen basierend auf dem Vergleich der jeweiligen Bewertungen.

7. Verfahren nach Anspruch 1, ferner umfassend:
- Speichern (6) der gesammelten Informationen und/oder der bewerteten Informationen beim Client (2).

8. Verfahren nach Anspruch 2, ferner umfassend:
- erneutes Bewerten von einem oder mehreren der Wahrscheinlichkeitsfaktoren mittels Rückmeldungsinformationen, die von einer oder mehreren der Anwendungen (5) empfangen werden, wobei die eine oder die mehreren Anwendungen (5) dem Client (2) eine Rückmeldung geben, dass die Anwendungen (5) nicht mit den spezifischen Vorschlägen einverstanden sind, die der Client (2) den Anwendungen (5) bereitgestellt hat.

9. Verfahren nach Anspruch 1, wobei das Sammeln von Informationen ferner umfasst:
- Sammeln durch den Client (2) von Informationen über denselben Netzknoten (3) des Kommunikationsnetzes (1) von einer Vielzahl von Servern (4).

10. Verfahren nach Anspruch 2, wobei das Ausgeben eines Ergebnisses umfasst:
- Ausgeben eines Knotens (3) zur Verwendung durch die eine oder mehreren Anwendungen (5), um Netzwerkdaten abzurufen und/oder Netzwerkdaten zu speichern.

11. Client (2), der dazu vorgesehen ist, Informationen über einen oder mehrere Netzknoten (3) des Kommunikationsnetzes (1) von einer Vielzahl von Servern (4) mittels eines Anwendungsschicht-Datenverkehrsoptimierungs, ALTO,-Protokolls zu sammeln, **gekennzeichnet dadurch, dass**
der Client (2) ferner dazu vorgesehen ist, die von der Vielzahl von Servern (4) gesammelten Informationen zu bewerten, wobei der Client (2) dazu vorgesehen ist, abzuschätzen, ob die Informationen vertrauenswürdig sind, wobei der Client (2) dazu vorgesehen ist, bei der Bewertung der Informationen einen oder mehrere Informationsqualitätsfaktoren (8) der gesammelten Informationen zu bestimmen und den einen oder die mehreren bestimmten Informationsqualitätsfaktoren (8) dem entsprechenden Teil der gesammelten Informationen als Wahrscheinlichkeitsfaktoren zuzuordnen und die von den verschiedenen der Vielzahl von Servern (4) gesammelten Informationen einen oder mehreren jeweiligen Wahrscheinlichkeitsfaktoren zuzuordnen.

12. Computerprogramm, das dazu vorgesehen ist, das Verfahren nach einem der Ansprüche 1 bis 10 auszuführen, wenn das Computerprogramm auf einem Computer ausgeführt wird.

## Revendications

1. Procédé de mise à disposition d'informations dans un réseau de communications (1), le procédé comprenant:
le recueil par un client (2) d'informations relatives à un ou plusieurs noeuds de réseau (3) du réseau de communications (1) depuis une pluralité de serveurs (4) au moyen d'un protocole d'optimisation de trafic de couche d'application, ALTO,
le procédé étant **caractérisé en ce qu'**il comprend en outre :
l'évaluation des informations recueillies depuis la pluralité de serveurs (4) par le client (2), le client (2) établissant si les informations sont dignes de confiance, dans lequel l'évaluation des informations comprend :
la détermination d'un ou plusieurs facteurs de qualité des informations (8) des informations recueillies et l'attribution des un ou plusieurs facteurs de qualité des informations (8) en tant que facteurs de certitude à la partie correspondante des informations recueillies ;
et l'attribution d'un ou plusieurs facteurs de certitude respectifs aux informations recueillies depuis des serveurs différents de la pluralité de serveurs (4).

2. Procédé selon la revendication 1, le procédé comprenant en outre :
la réception, par le client (2), d'une ou plusieurs demandes d'informations d'une ou plusieurs applications (5) ;
le traitement de la ou des demandes au moyen des informations recueillies ;
le renvoi d'un résultat du traitement à l'application respective (5).

3. Procédé selon la revendication 1, dans lequel l'évaluation des informations comprend en outre :
la détermination d'un facteur de fiabilité des informations (7) d'un ou plusieurs serveurs (4) de la pluralité de serveurs (4) depuis lesquels les informations ont été recueillies et l'attribution du ou des facteurs de fiabilité des informations (7) déterminés en tant que facteurs de certitude à la partie correspondante des informations recueillies.

4. Procédé selon la revendication 2, comprenant en outre :
l'évaluation des informations recueillies depuis la pluralité de serveurs (4) par le client (2) et le traitement des une ou plusieurs demandes au moyen des informations recueillies et du résultat de l'évaluation.

5. Procédé selon la revendication 4, comprenant en outre :
la combinaison (9) des informations recueillies depuis des serveurs différents de la pluralité de serveurs (4) sur la base de l'évaluation et le traitement de la demande sur la base de ces informations combinées.

6. Procédé selon la revendication 2, dans lequel l'étape de traitement de la ou des demandes comprend :
le traitement de la demande plusieurs fois sur la base des informations recueillies depuis des serveurs différents de la pluralité de serveurs (4), le client (2) exécutant un premier traitement de la demande sur la base des informations recueillies depuis un premier serveur (4a) de la pluralité de serveurs (4) et le client (2) exécutant ensuite un second traitement de la demande sur la base des informations recueillies depuis un second serveur (4b) de la pluralité de serveurs (4) ;
l'évaluation des informations recueillies depuis les serveurs différents (4a, 4b) de la pluralité de serveurs (4) et utilisées pour ledit traitement multiple ;
la sélection de l'un des résultats dudit traitement multiple des demandes sur la base de la comparaison de l'évaluation respective.

7. Procédé selon la revendication 1, comprenant en outre :
la mémorisation (6) des informations recueillies et/ou des informations évaluées sur le client (2).

8. Procédé selon la revendication 2, comprenant en outre :
la réévaluation d'un ou plusieurs des facteurs de certitude au moyen d'informations de rétroaction reçues depuis une ou plusieurs des applications (5), dans lequel l'application ou les applications (5) donnent un retour d'informations au client (2) consistant en ce que les applications (5) ne sont pas satisfaites des propositions spécifiques fournies par le client (2) aux applications (5).

9. Procédé selon la revendication 1, dans lequel le recueil d'informations comprend en outre :
le recueil par le client (2) d'informations relatives à un même noeud de réseau (3) du réseau de communications (1) depuis une pluralité de serveurs (4).

10. Procédé selon la revendication 2, dans lequel le recueil d'informations comprend en outre :
la remise d'un noeud (3) destiné à être utilisé par l'application ou les applications (5) pour récupérer des données de réseau et/ou pour mémoriser des données de réseau.

11. Client (2) conçu pour recueillir des informations relatives à un ou plusieurs noeuds de réseau (3) du réseau de communications (1) depuis une pluralité de serveurs (4) au moyen d'un protocole d'optimisation de trafic de couche d'application, ALTO,
**caractérisé en ce que**
le client (2) est en outre conçu pour évaluer les informations recueillies depuis la pluralité de serveurs (4), le client (2) étant conçu pour établir si les informations sont dignes de confiance, dans lequel pour évaluer les informations, le client (2) est conçu pour déterminer un ou plusieurs facteurs de qualité des informations (8) des informations recueillies et pour attribuer le ou les facteurs de qualité des informations (8) en tant que facteurs de certitude à la partie correspondante des informations recueillies et pour attribuer un ou plusieurs facteurs de certitude respectifs aux informations recueillies depuis des serveurs différents de la pluralité de serveurs (4).

12. Programme informatique conçu pour exécuter le procédé selon l'une quelconque des revendications 1 à 10 lorsque le programme informatique est exécuté sur un ordinateur.
